# EUROPEAN PATENT APPLICATION

(11) **EP 2 276 255 A2**
(43) Date of publication of application: **19.01.2011**
(21) Application number: 09754961.2
(22) Date of filing: 03.04.2009
(51) Int. Cl.: H04N 7/173

(54) **USER-PERSONALIZED SERVICE-PROVISION METHOD AND APPARATUS WITHIN A BROADCASTING SYSTEM, AS WELL AS A SYSTEM THEREFOR**

(30) Priority: 04.04.2008 KR 20080031898
(71) Applicant: Samsung Electronics Co., Ltd., Suwon-si, Gyeonggi-do 442-742 (KR)
(72) Inventor: LEE, Jong-Hyo, Suwon-si Gyeonggi-do (KR); JUNG, Bo-Sun, Suwon-si Gyeonggi-do (KR); HWANG, Sung-Oh, Suwon-si Gyeonggi-do (KR)
(74) Representative: van Westenbrugge, Andries
(86) International application number: PCT/KR2009/001743
(87) International publication number: WO 2009/145496

(57) **Abstract**

A method and apparatus for providing a personalized service in a broadcasting system, and a system thereof. A BCAST Subscription Management (BSM) sends a service creation request message to a BCAST Service Distribution/Adaptation (BSDA), the service creation request message including at least one purchase data fragment to which maximum allowed content and maximum allowed service elements are added. The BSDA creates a service guide using the purchase data fragments, and delivers it to a terminal. The terminal checks a service type in the service guide, sends a subscription request for the personalized service to the BSM, receives an encryption key associated with the personalized service, and receives the personalized service with the encryption key.

## Description

### BACKGROUND OF THE INVENTION

### 1. Field of the Invention

The present invention relates generally to a mobile broadcasting system supporting Broadcast Service (BCAST). More particularly, the present invention relates to a method and apparatus for providing a personalized service based on user's preference, and a system thereof.

### 2. Description of the Related Art

The mobile communication market continuously requires creation of new services through recombination or integration of the existing technologies. Current development of communication and broadcast technologies has allowed conventional broadcasting systems and mobile communication systems to provide broadcast services through portable terminals (or mobile terminals), such as mobile phones and Personal Digital Assistants (PDAs).

Due to latent and actual market needs and increasing user demand for multimedia services, service providers' intended strategies for providing new services such as broadcast service in addition to the existing voice service, and the identified interests of Information Technology (IT) companies which are bolstering their mobile communication businesses to meet the user's demands, convergence of mobile communication service and Internet Protocol (IP) has become a priority in the development of next generation mobile communication technologies. The convergence has come to introduce and apply various wireless/broadcast services not only in the mobile communication market but also in the general wire communication market, and the all-around convergence has made the same consumption environment for different services no matter whether they are wire or wireless/broadcast services.

Open Mobile Alliance (OMA), a group for studying the standard for interworking between individual mobile solutions, serves to define various application standards for mobile games and Internet services. Of the OMA working groups, Open Mobile Alliance Browser and Content Mobile Broadcast Working Group (OMA BCAST) is researching on the technology for providing broadcast services using mobile terminals.

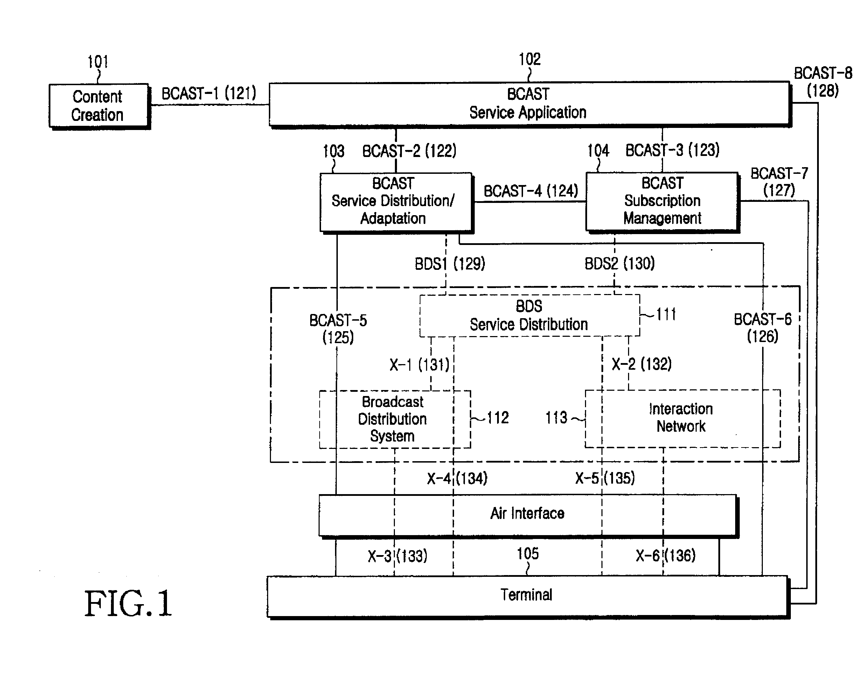

FIG. 1 a block diagram illustrating architecture of a BCAST system to which the present invention is applied. The shown is logical architecture proposed by OMA BCAST that establishes standards for an application layer and up to its lower layer, i.e. a transport layer, to provide broadcast services.

Referring to FIG. 1, a Content Creation (CC) 101 provides contents which are the basis of BCAST services. The contents can be files for common broadcast services, e.g. data for movie, audio and video. The Content Creation 101 provides a BCAST Service Application 102 with attributes for the contents, which are used to create a service guide and determine a transmission bearer over which the services will be delivered.

The BCAST Service Application 102 receives data for BCAST services provided from the Content Creation 101, and converts the received data in a form suitable to provide media encoding, content protection, interactive services, etc. The BCAST Service Application 102 provides the attributes for the contents, which are received from the Content Creation 101, to a BCAST Service Distribution/Adaptation (BSDA) 103 and a BCAST Subscription Management (BSM) 104.

The BCAST Service Distribution/Adaptation 103 performs operations such as file/streaming delivery, service gathering, service protection, service guide creation/delivery and service notification, using the BCAST service data provided from the BCAST Service Application 102. The BCAST Service Distribution/Adaptation 103 adapts the services to a Broadcast Distribution System (BDS) 112.

The BCAST Subscription Management 104 manages, in a hardware or software manner, service provisioning such as subscription and charging-related functions for BCAST service users, information provisioning used for BCAST services, and mobile terminals (hereinafter, "terminals") that receive the BCAST services.

A Terminal 105 receives content/service guide and program support information such as content protection, and provides a broadcast service to a user. A BDS Service Distribution 111 delivers mobile broadcast services to a plurality of terminals through mutual communication with the Broadcast Distribution System 112 and an Interaction Network 113.

The Broadcast Distribution System 112 delivers mobile broadcast services over a broadcast channel, and may include, for example, Multimedia Broadcast Multicast Service (MBMS) by 3^{rd} Generation Project Partnership (3GPP), Broadcast Multicast Service (BCMCS) by 3^{rd} Generation Project Partnership 2 (3GPP2), DVB-Handheld (DVB-H) by Digital Video Broadcasting (DVB), or Internet Protocol (IP)-based broadcasting/communication network. The Interaction Network 113 provides an interaction channel, and may include, for example, a cellular network and the like.

A description will now be made of reference points which are connection paths between the above logical entities. The reference points have a plurality of interfaces according to their purposes. The interfaces are used for communication between two or more logical entities for their specific purposes, and a message format, a protocol and the like for the interfaces are applied.

BCAST-1 121 in FIG. 1 is a transmission path for contents and content attributes, and BCAST-2 122 is a transmission path for a content-protected or content-unprotected BCAST service, attributes of the BCAST service, and content attributes. BCAST-3 123 is a transmission path for attributes of a BCAST service, attributes of content, user preference/subscription information, a user request, and a response to the request. BCAST-4 124 is a transmission path for a notification message, attributes used for a service guide, and a key used for content protection and service protection.

BCAST-5 125 in FIG. 1 is a transmission path for a protected BCAST service, an unprotected BCAST service, a content-protected BCAST service, a content-unprotected BCAST service, BCAST service attributes, content attributes, a notification, a service guide, security materials such as Digital Right Management (DRM) Right Object (RO) and key values used for BCAST service protection, and all data and signaling transmitted through a broadcast channel.

BCAST-6 126 in FIG. 1 is a transmission path for a protected BCAST service, an unprotected BCAST service, a content-protected BCAST service, a content-unprotected BCAST service, BCAST service attributes, content attributes, a notification, a service guide, security materials such as DRM RO and key values used for BCAST service protection, and all data and signaling transmitted through an interaction channel.

BCAST-7 127 in FIG. 1 is a transmission path for service provisioning, subscription information, device management, and user preference information transmitted through an interaction channel for control information related to receipt of security materials such as DRM RO and key values used for BCAST service protection.

BCAST-8 128 is a transmission path through which user data for a BCAST service is interacted. BDS-1 129 is a transmission path for a protected BCAST service, an unprotected BCAST service, BCAST service attributes, content attributes, a notification, a service guide, and security materials such as DRM RO and key values used for BCAST service protection. BDS-2 130 is a transmission path for service provisioning, subscription information, device management, and security materials such as DRM RO and key values used for BCAST service protection.

X-1 131 in FIG. 1 is a reference point between the BDS Service Distribution 111 and the Broadcast Distribution System 112. X-2 132 is a reference point between the BDS Service Distribution 111 and the Interaction Network 113. X-3 133 is a reference point between the Broadcast Distribution System 112 and the Terminal 105. X-4 134 is a reference point between the BDS Service Distribution 111 and the Terminal 105 over a broadcast channel. X-5 135 is a reference point between the BDS Service Distribution 111 and the Terminal 105 over an interaction channel. X-6 136 is a reference point between the Interaction Network 113 and the Terminal 105.

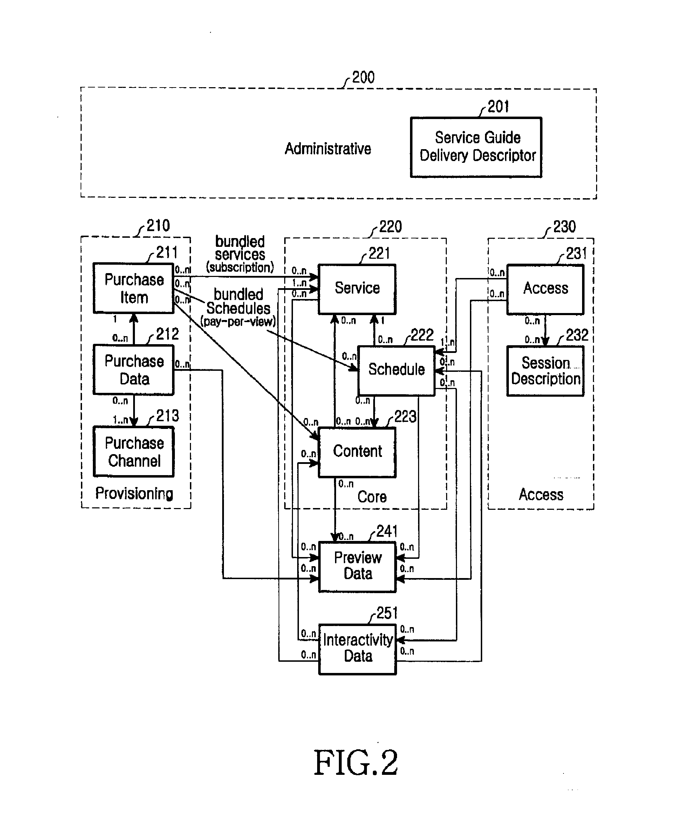

FIG. 2 is a diagram illustrating a structure of a service guide for receipt of a broadcast service, to which the present invention is applied. The shown is a data model for creating a service guide. In FIG. 2, a solid line connecting fragments means a cross-reference between the fragments.

Referring to FIG. 2, an example of a service guide data model includes an Administrative Group 200, a Provisioning Group 210, a Core Group 220, and an Access Group 230.

The Administrative Group 200 provides basic information for allowing a terminal to receive a service guide. That is, the Administrative Group 200 provides upper configuration information of the entire service guide. The Administrative Group 200 includes a Service Guide delivery Descriptor 201.

The Provisioning Group 210 includes subscription and purchase information. The Provisioning Group 210 has PurchaseItem 211, PurchaseData 212, and PurchaseChannel 213.

The Core Group 220 is a core part of the service guide, including services, contents, and schedules, and includes Service 221, Schedule 222, and Content 223.

The Access Group 230 provides access information to enable access to services or contents, and includes Access 231 and Session Description 232.

The other service guide information, as illustrated in FIG. 2, may include PreviewData 241 and InteractivityData 251 in addition to the 4 groups described above. Each of the above-stated components is referred to as a fragment which is the minimum unit that constitutes the service guide. That is, one service guide is composed of fragments that have their own purposes, and the fragments are divided into different groups according to their use. In FIG. 2, a solid line connecting fragments means a cross-reference between the fragments.

Components of each of the fragments will be described. The Service Guide Delivery Descriptor fragment 201 provides information about a delivery session where a Service Guide Delivery Unit (SGDU) is located that contains a fragment constituting the service guide, and also provides grouping information for the SGDU and information about an entry point for receiving a Notification message. In addition, the Service Guide Delivery Descriptor fragment 201 provides information about an entry point for receiving the service guide and grouping information for the SGDU which is a container of the fragment.

The PurchaseItem fragment 211 provides a bundle of service, content, time, etc. to help the user subscribe to or purchase the PurchaseItem fragment 211. The PurchaseData fragment 212 includes detailed purchase and subscription information such as price information and promotion information for the service or content bundle. The PurchaseChannel fragment 213 provides access information for subscription or purchase.

The Service fragment 221, an upper aggregate of the contents included in the broadcast service as the center of the entire service guide, includes information on service content, genre, service location and so forth. The Schedule fragment 222 represents time information of each of the contents included in the Streaming and Downloading services. The Content fragment 223 includes a detailed description of the broadcast contents, target user group, service location, genre, etc.

The Access fragment 231 provides access-related information for allowing the user to view the service, and also provides delivery method and session information associated with the access session.

The Session Description fragment 232 may be included in the Access fragment 231, and provides location information in a Uniform Resource Identifier (URI) form so that the terminal may detect information on the Session Description fragment 232. The Session Description fragment 232 provides address information, codec information and so forth about multimedia contents existing in the session.

In addition, the PreviewData fragment 241 can be used to provide preview information for service, schedule and content, or the InteractivityData fragment 251 can be used to provide an interactive service according to the service, schedule and content during broadcasting.

The detailed information about the service guide may be defined with various elements and attributes for providing detailed contents and values, based on the upper data model in FIG. 2.

As described above, the BCAST system intends to provide users with many various services through the service guide just as the wire system provides services.

However, in light of the characteristics of a mobile terminal or a mobile broadcasting system, a user may enjoy services while on the move or when he has time to spare. Sometimes, the user may need considerable time to search for his desired services.

For these reasons, the user may feel great inconvenience. To address this problem, there is a need for a service provision method in which the user can more rapidly access a desired service. Furthermore, a service provision scheme is needed that can reduce the time the user requires to select a service when the services preferred by the user can always be provided.

### SUMMARY OF THE INVENTION

Accordingly, an aspect of the present invention provides a method and apparatus for providing a broadcast service taking user preference into account in a broadcasting system, and a system thereof.

Another aspect of the present invention provides a method and apparatus for providing a personalized service to a user taking preference of a terminal user into account in a broadcasting system, and a system thereof.

Another aspect of the present invention provides a method and apparatus in which a user of a terminal subscribes to a personalized service and receives specific service and content to which the user subscribed, in a broadcasting system, and a system thereof.

In accordance with one aspect of the present invention, there is provided a method for providing a personalized service in a broadcasting system. The method includes providing, by a BCAST Subscription Management (BSM), a personalized service; delivering, by a user, a user preference and a subscription period to the BSM; and managing, by the BSM, subscription to the personalized service taking the user preference and the subscription period into account.

In accordance with another aspect of the present invention, there is provided a method for providing a personalized service in Broadcast Service (BCAST). The method includes sending, by a BCAST Subscription Management (BSM), a service creation request message to a BCAST Service Distribution/Adaptation (BSDA), the service creation request message including at least one purchase data fragment to which maximum allowed content and maximum allowed service elements are added; creating, by the BSDA, a service guide using the purchase data fragments, and delivering the created service guide to a terminal; checking, by the terminal, a service type in the service guide, and sending a request for subscription to the personalized service to the BSM; and sending, by the BSM, a subscription response message including information used to determine whether to finally select the personalized service, and sending an encryption key associated with the personalized service to the terminal.

### BRIEF DESCRIPTION OF THE DRAWINGS

The above and other aspects, features and advantages of certain exemplary embodiments of the present invention will be more apparent from the following description taken in conjunction with the accompanying drawings, in which:
FIG. 1 a diagram illustrating logical architecture in OMA BCAST, to which the present invention is applied:
FIG. 2 is a diagram illustrating a structure of a service guide to which the present invention is applied;
FIG. 3 is a message flow diagram for providing a personalized service according to the present invention;
FIG. 4 is a signal flow diagram of a terminal according to an embodiment of the present invention; and
FIG. 5 is a signal flow diagram of a BSM according to an embodiment of the present invention.

### DETAILED DESCRIPTION OF EXEMPLARY EMBODIMENTS

Preferred embodiments of the present invention will now be described in detail with reference to the accompanying drawings.

The matters defined in the description such as a detailed construction and elements are provided to assist in a comprehensive understanding of the embodiments of the invention. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

In the following detailed description, exemplary embodiments of the present invention are illustrated and described for achieving the above and other objects. Although names of the entities defined in the 3^{rd} Generation Partnership Project (3GPP) which is the asynchronous mobile communication standard, or OMA BCAST which is the application standard for mobile terminals will be used for convenience, the standards and names are not intended to limit the scope of embodiments of the present invention, and the present invention can be applied to any systems having the same or similar technical backgrounds.

For example, OMA BCAST, to which the present invention is applied, standardizes technologies for providing IP-based broadcast services in a portable terminal environment, including service guidance, download/streaming delivery technology, service/content protection technology, service subscription, and roaming. In this context, the present invention provides a scheme capable of allowing OMA BCAST mobile broadcasting technology to provide services in the wire/wireless integrated environment beyond the mobile environment, in order to meet the market trend of providing integrated services due to convergence of wire/wireless environments.

For convenience, all detailed elements and attributes for fragments in a service guide defined by OMA BCAST technology will not be described in detail herein. The detailed exemplary elements and attributes should not limit the present invention, meaning that all elements and attributes, which will be defined later if needed, can be applied to the present invention with regard to a service guide provided for a mobile broadcast service.

A message schema used in the present invention is described in Table 1 below.

**Table 1**

| Name | Type | Category | Cardinality | Description | Data Type |
|---|---|---|---|---|---|
| | | | | | |

Here, 'Name' indicates names of elements and attributes constituting a pertinent message. 'Type' indicates whether a type of a specific name is an element or an attribute. An element has values such as E1, E2, E3 and E4, in which E1 means an upper element for the entire message, and E2 indicates a sub-element of E1, E3 a sub-element of E2, and E4 a sub-element of E3. An attribute is represented by 'A', and 'A' indicates an attribute of a pertinent element. For example, 'A' under E1 indicates an attribute of E1. 'Category' is used to identify whether an element or an attribute is mandatory or optional, and has an M value for the 'mandatory' and an O value for the 'optional'. A 'Cardinality' indicates a relationship between elements, and has values of '0', '0..1', '1', '0..n', and '1..n', where "0" denotes an optional relation, "1" denotes a mandatory relation, and 'n' denotes the possibility of having a plurality of values. For example, '0..n' denotes the possibility that there is no corresponding element or that there are n corresponding elements. 'Description' defines the meaning of the corresponding element or attribute. 'Data Type' indicates a data type of the corresponding element or attribute.

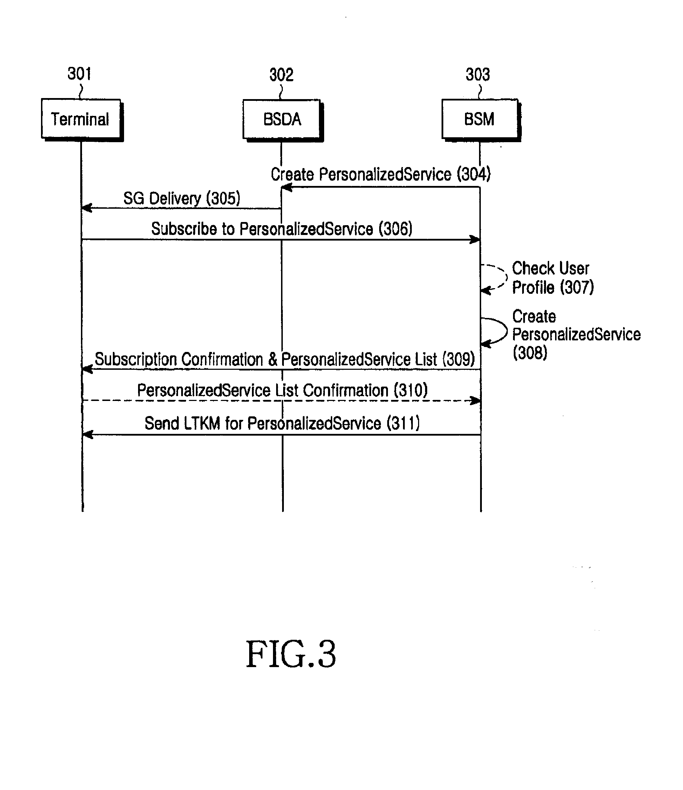

FIG. 3 is a message flow diagram for providing a personalized service according to the present invention.

Referring to FIG. 3, a broadcasting system includes a terminal 301, a BCAST Service Distribution/Adaptation (BSDA) 302, and a BCAST Subscription Management (BSM) 303. These logical entities are equal to the entities 105, 103 and 104 in FIG. 1, respectively.

In step 304, the BSM 303 sends a request for creation of a personalized service to the BSDA 302. Here, the BSM 303 may send a service creation request message, which includes a PurchaseData fragment indicating purchase information that the terminal 301 needs to subscribe to a personalized service. A plurality of PurchaseData fragments may be included to represent one personalized service. This is to provide various subscription periods to a user of the terminal 301. In addition, in creating a personalized service, the service provider may provide a personalized service for a specific period, provide a personalized service corresponding to the number of specific contents or specific services, or provide a personalized service corresponding to the number of specific contents or specific services for a specific period.

For the personalized service, a maximum allowed content (hereinafter, 'MaxAllowedContent') element and a maximum allowed service (hereinafter, 'MaxAllowedService') element, which are new elements, are defined in the PurchaseData fragment. The MaxAllowedContent and MaxAllowedService elements are used to indicate the maximum number of services or contents that the user can access when the service provider provides a personalized service to the user.

Table 2 below illustrates a PurchaseData fragment to which MaxAllowedContent and MaxAllowedService are added that are new elements defined by the present invention.

**Table 2**

| **Name** | **Type** | **Category** | **Cardinality** | **Description** | **Data Type** |
|---|---|---|---|---|---|
| Purchase Data | E | | | 'PurchaseData' fragment Contains the following attributes: id version validFrom validTo | |
| | | | | Contains the following elements: ProtectionKeyID | |
| | | | | Description PriceInfo PromotionInfo Extension PurchaseItemReference PurchaseChannelReference PreviewDataReference TermsOfUse PrivateExt | |
| Omitted | | | | | |
| PriceInfo | E1 | NM/ TM | 0..1 | Specifies the price information of the purchase item associated with this 'PurchaseData' fragment If the price is not given, it will be negotiated with the user as part of the purchase transaction. In this case, the 'PurchaseData' fragment merely reflects that a certain purchase item can be purchased from the purchase channel. Contains the following attribute: subscriptionType Contains the following elements: MonetaryPrice TotalNumberCredits SubscriptionPeriod MaxAllowedContent MaxAllowedService | |
| Omitted | | | | | |
| MaxAllo wedConte nt | E2 | NM/TM | 0..1 | Maximum number of content allowed per subscription of a Personalized Service. If the service provider is providing Personalized Services on a content item basis this element represents the number of contents that is allowed in this PurchaseData | unsignedI nt |
| MaxAllo wedServi ce | E2 | NM/TM | 0..1 | Maximum number of service allowed per subscription of a Personalized Service. If the service provider is providing Personalized Services on a service basis this element represents the number of service that is allowed in this PurchaseData | unsignedI nt |
| Omitted | | | | | |

Upon receiving the request for creation of a personalized service in step 304, the BSDA 302 creates a service guide with a personalized service included, using the PurchaseData fragments received along with the request message. In step 305, the BSDA 302 delivers the created service guide to the terminal 301. That is, a PersonalizedService fragment is created in the service guide, which is delivered in step 305, in order to indicate the personalized service. To support the PersonalizedService fragment, 'Personalized Service' is defined in the Service fragment as a new service type. A format of a Service fragment to which the service type 'Personalized Service' is added that indicates a personalized service, is illustrated in Table 3 below.

**Table 3**

| **Name Type** | | **Category** | **Cardinality** | **Description** | **Data Type** |
|---|---|---|---|---|---|
| Service | E | | | 'Service' fragment Contains the following attributes: id version validFrom validTo globalServiceID weight serviceContentProtection baseCID emergency | |
| | | | | Contains the following elements: ProtectionKeyID ServiceType Name Description AudioLanguage TextLanguage ParentalRating TargetUserProfile Genre Extension PreviewDataReference BroadcastArea TermsOfUse PrivateExt | |
| Omitted | | | | | |
| ServiceTy pe | E1 | NM/ TM | 0..N | Type of the service. Allowed values are: | unsigned Byte |
| | | | | 0 - unspecified | |
| | | | | 1 - Basic TV | |
| | | | | 2 - Basic Radio | |
| | | | | 3 - RI services | |
| | | | | 4 - Cachecast 5 - File download services 6 - Software management services 7 - Notification 8 - Service Guide 9 - Terminal Provisioning services 10 - Personalized Service 11 - 127 reserved for future use 128 -255 reserved for proprietary use | |
| | | | | The mixed service types SHALL be indicated by the presence of multiple instances of ServiceType (for example, for mixed Basic TV and Cachecast, two instances of ServiceType, with values 1 and 4 are present for this 'Service' fragment. This element SHALL be processed by the terminal strictly for rendering to the user for example as a textual indicator, an icon, or graphic representation for the service. However, 'ServiceType' with value of 3 and 9 SHALL NOT be rendered and their existence SHOULD NOT be displayed to the user. With value 6, i.e. software management services, users can select the desired software components (e.g. desktop theme, ring tone, SG navigator update) to download over broadcast channel or interaction channel. The software components provided by this software management service are described by 'Content' fragments which belong to this 'Service' fragment. It is not expected that terminals are able to automatically select and download software components using this type of service. | |
| Omitted | | | | | |

Upon receiving the service guide in step 305, the terminal 301 checks the personalized service using the service type in the service guide. Further, the terminal 301 checks purchase conditions to subscribe to the service using a PurchaseData fragment, selects the service, and then sends a subscription request to the BSM 303 in step 306.

The subscription request message used in step 306 newly includes a UserPreference element indicating user preference and its sub-elements 'genre' and 'preferenceProfile' in a subscription request message defined by BCAST. The preferenceProfile is divided into attributeName and attribute Value elements. The UserPreference element indicates subscription to a personalized service and represents necessary information. The 'genre' element indicates a service or content genre in which the user is interested, and the 'preferenceProfile' is used to carry detailed user preference. The two elements both may be used in plural, and they may be used individually or together. Also, none of them may be used.

If the terminal 301 intends to use a user preference profile stored in the BSM 303 without representing the preference separately, the terminal 301 only needs to send a message without the preferenceProfile and genre elements to the BSM 303.

Table 4 below shows a service subscription request message in which the foregoing details are reflected, and this is a subscription request message with UserPreference added.

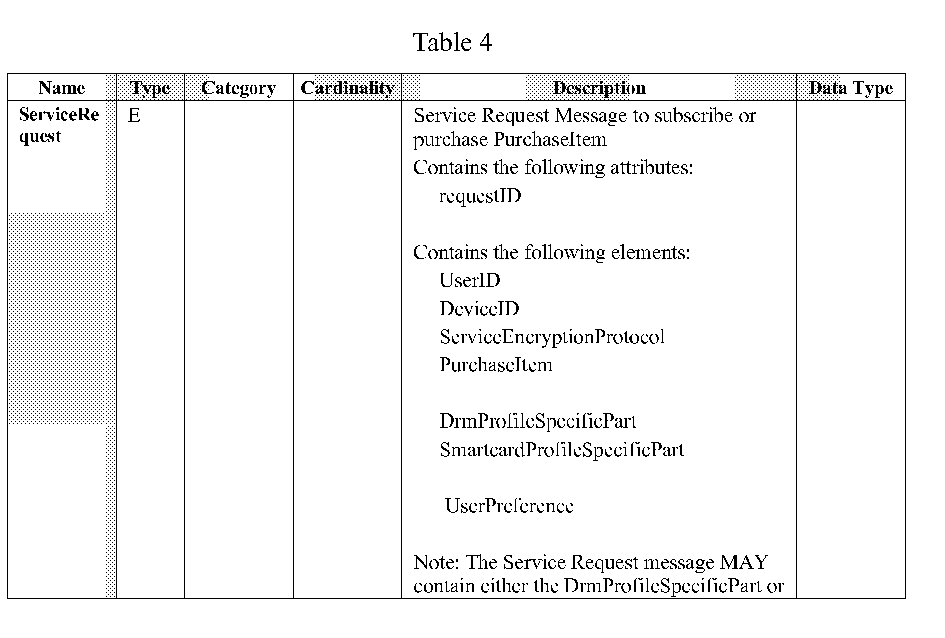

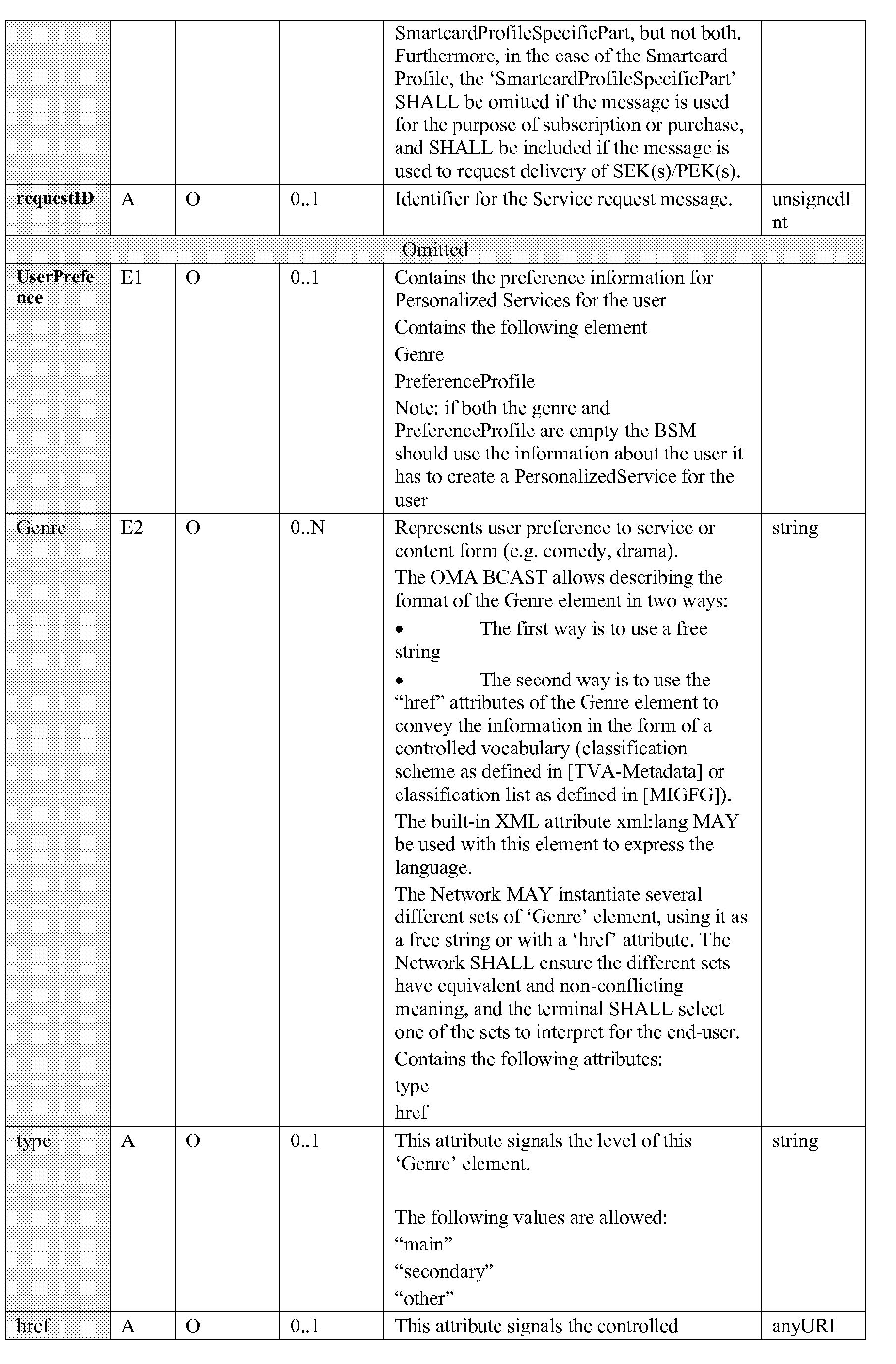

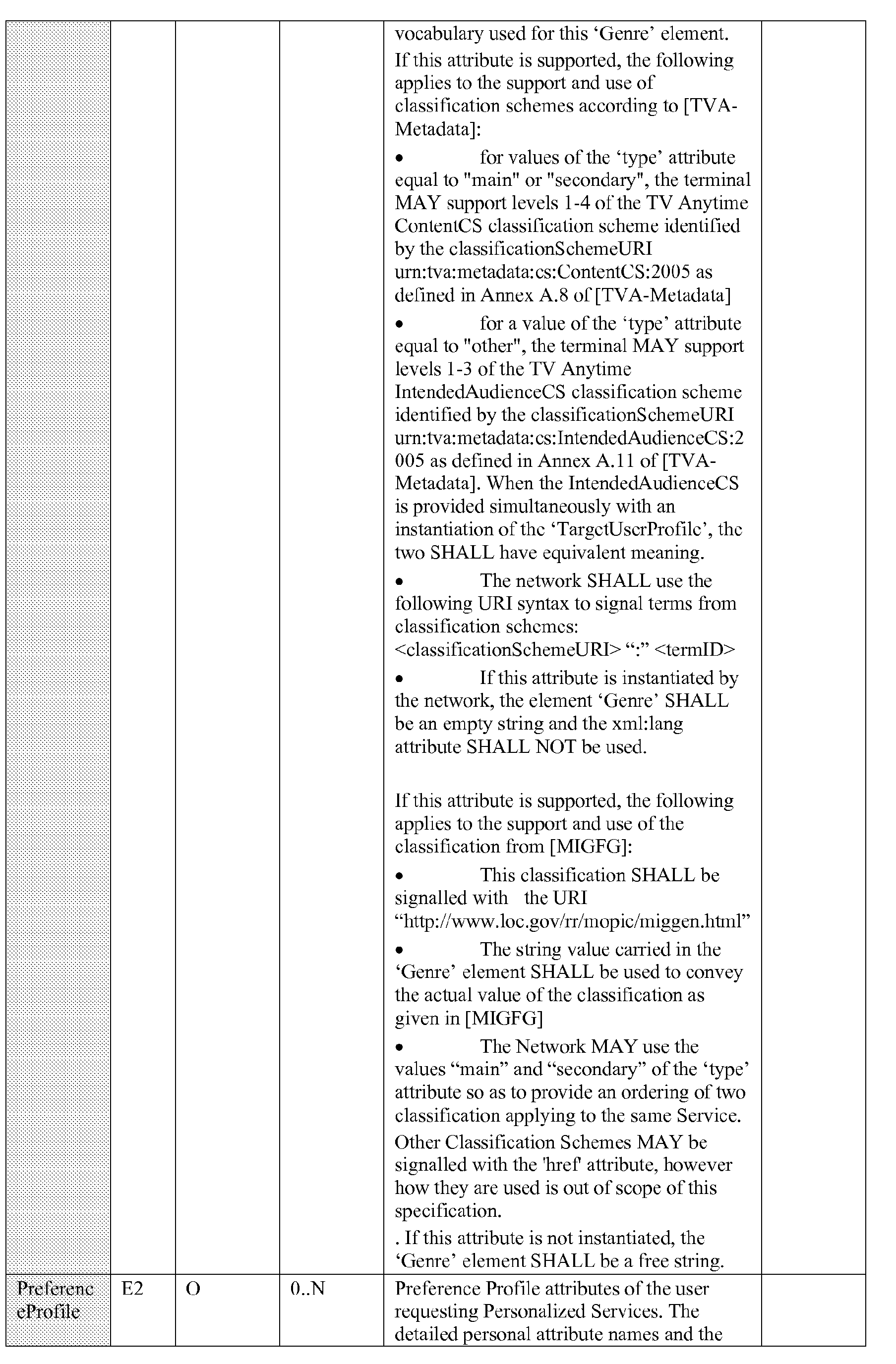

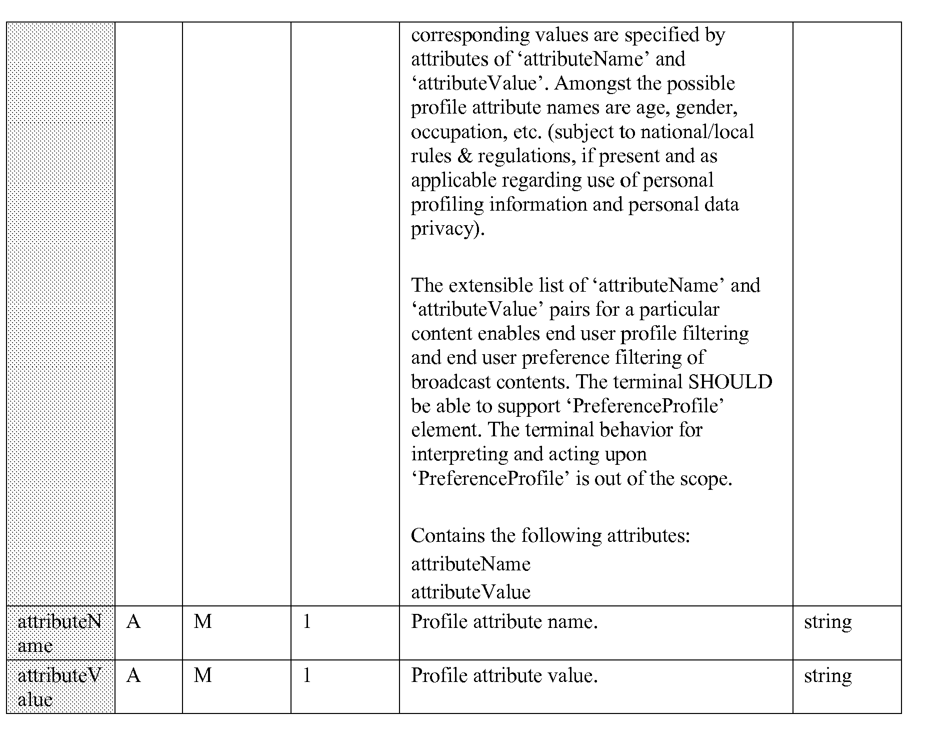

Upon receiving the personalized service subscription request in step 306, the BSM 303 acquires information necessary for the personalized service using a user profile stored therein in step 307, when there is no information necessary for the personalized service in the received message. In step 308, the BSM 303 creates a personalized service using personalized service creation information acquired from the personalized service subscription request message or the user profile stored in the BSM 303. As regards the personalized service created in step 308, the BSM 303 sends a personalized service response message to the terminal 301 in step 309.

As for the response message sent in step 309, a PersonalizedService element added for the present invention and its sub-elements ConfirmationRequired, Scheduleld, Serviceld and ContentId are included in a service subscription response message defined by BCAST. Optionally, PurchaseItemFragment and PurchaseDataFragment may be added. The PersonalizedService element in the subscription response message indicates that the message is a response to the personalized service subscription request and has its associated information.

For provisioning of the personalized service, the BSM 303 may select various types of personalized service candidates for users and send a selection request to the users, and the ConfirmationRequired is used to require the user's final selection and confirmation in the list of the personalized services that the BSM 303 created for the users. The Scheduleld, an identifier of a Schedule fragment, is used to inform the terminal 301 of a certain time based on which it will provide the service and content to the user. The Serviceld and ContentId, identifiers of a Service fragment and a Content fragment, respectively, are used to indicate which service or content it will provide according to time information of the Schedule fragment.

The optional PurchaseItemFragment and PurchaseDataFragment are used when the BSM 303 provides the personalized service by newly defining a purchase fragment in a server for the user. The PurchaseItemFragment provides information about service, content and time in the personalized service, and the PurchaseDataFragment includes detailed purchase and subscription information such as price information and promotion information of the PurchaseItemFragment.

Table 5 below shows a service subscription response message in which the foregoing details are reflected, and this is a subscription response message to which a PersonalizedService element is added.

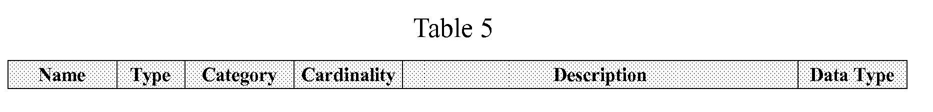

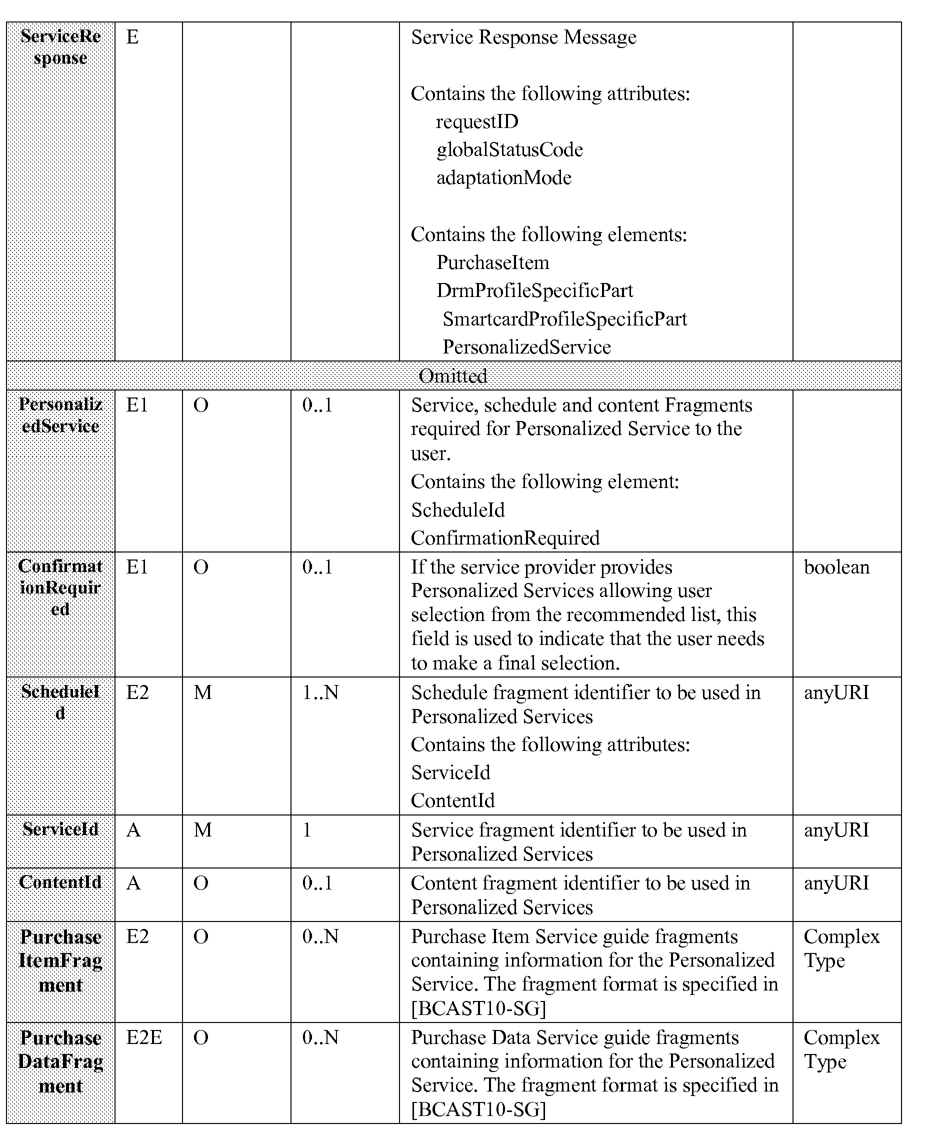

Step 310 shows a message that can be created optionally. When the service provider, in creating the personalized service, created and sent in step 309 a subscription response message so as to allow the user to make a selection by providing services or contents greater in number than the requested services or contents to the user for the same time, the user can select, in step 310, his desired service or content from the list provided by the service provider and finally send a personalized service list confirmation message to the BSM 303. A format of the personalized service list confirmation message sent in step 310 is shown in Table 6.

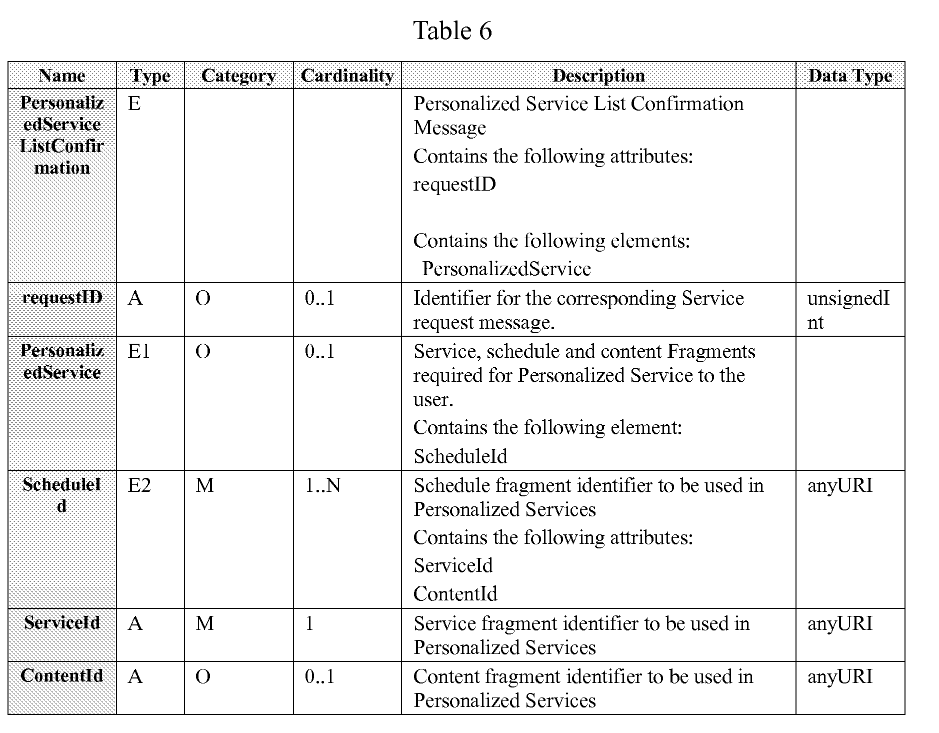

Finally, in step 311, the BSM 303 sends to the terminal 301 an encryption key (Long-Term Key Message (LTKM)) needed for use of the contents or services. The encryption key may be sent in the method defined by BCAST.

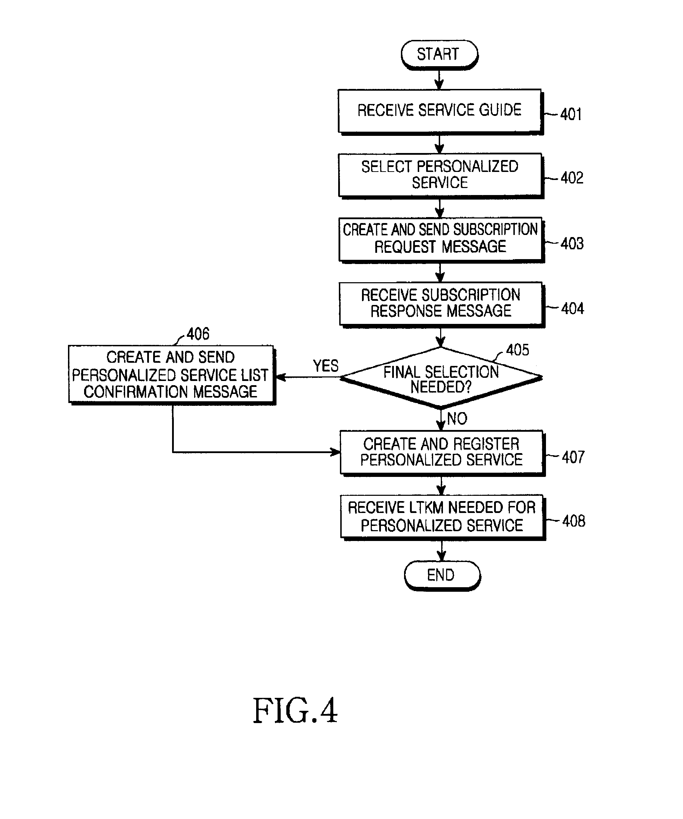

FIG. 4 is a signal flow diagram of a terminal supporting a personalized service according to the present invention.

Referring to FIG. 4, the terminal receives a service guide from a BSM and provides a user with the details of the service guide in step 401. The user recognizes the presence of a personalized service through the service guide in step 401, and selects his desired personalized service in step 402. The user may select the personalized service using a profile existing in the BSM 303.

Upon acquiring information about the personalized service selected in step 402, the terminal 301 creates a subscription request message and sends it to the BSM 303 in step 403. The message sent in step 403 is as shown in Table 4.

In step 404, the terminal receives a subscription response message from the BSM. The subscription response message received in step 404 is as shown in Table 5, and this message has information needed for creation of the personalized service to which the user subscribed.

The terminal analyzes the information needed for creation of the personalized service, which was acquired in step 404. If there is ConfirmationRequired, the terminal requests the user to finally select creation of the personalized service in step 405. When the selection is not needed, the terminal determines and creates each service and content and registers them to provide the user with the personalized service, in step 407. However, if the user must make a final selection, the terminal creates a personalized service list confirmation message shown in Table 6, sends it to the BSM, and then performs step 407 and its succeeding steps based on the service and content selected by the user.

In step 408, the terminal receives from the BSM an encryption key (LTKM) needed to access each service and content constituting the personalized service. Thereafter, the terminal receives the service and content using the encryption key.

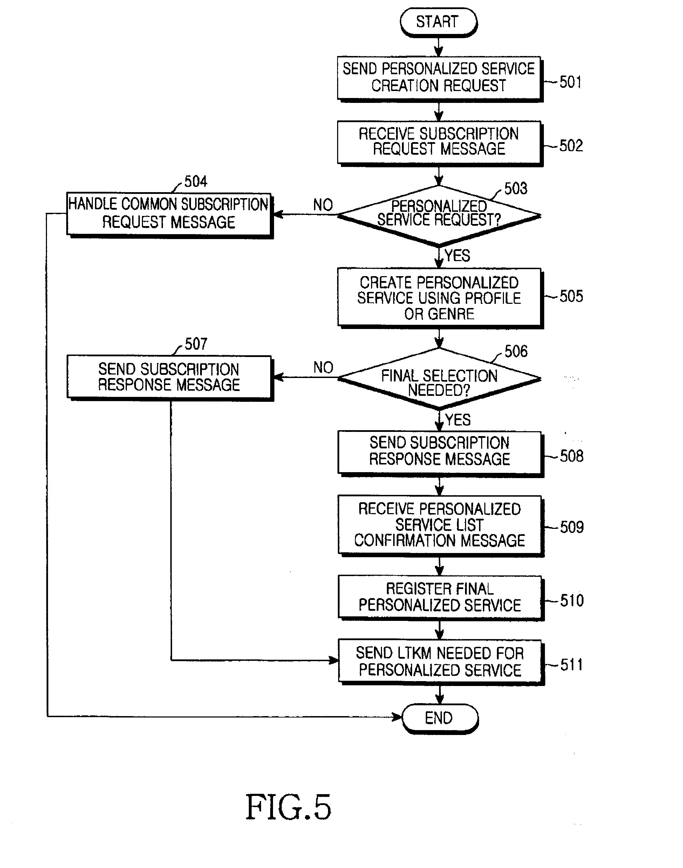

FIG. 5 is signal flow diagram of a BSM supporting a personalized service according to the present invention.

Referring to FIG. 5, the BSM sends a creation request for a personalized service to a BSDA in step 501. Here, the BSM creates PurchaseData fragments shown, for example, in Table 2 individually according to personalized service charging rates prescribed by respective service providers, and delivers them to the BSDA. In step 502, the BSM receives a subscription request message shown in Table 4 from a terminal that received a service guide, through the BSDA. In step 503, the BSM determines if the received subscription request message is a personalized service subscription request message. If the received message is a general subscription request message, the BSM performs a common subscription procedure in step 504. However, if the received message is discriminated as a personalized service subscription request message, the BSM creates, in step 505, a personalized service using a genre, and a profile provided by the user, or a profile stored in the BSM by analyzing a PersonalizedService element in the received subscription request message. The personalized service is created by selecting related service and content fragments based on a Schedule fragment.

The BSM creates the personalized service using contents or services which are greater in number than the contents or services requested by the user, and proceeds to step 506 when it requests the user to make a final selection.

Meanwhile, in case of creating a personalized service according to the received user's subscription request in step 503, the BSM creates a subscription response message shown in Table 5, in which identifiers of respective fragments corresponding to the personalized service are inserted, and sends the subscription response message to the terminal in step 507. Thereafter, the BSM executes step 511.

If the BSM intends to provide various possible selections and allow the user to make a final selection regarding the subscription conditions requested by the user through steps 505 and 506, the BSM creates a subscription response message shown in Table 5 using several fragment identifiers, sets ConfirmationRequired therein, and sends the message to the terminal in step 508.

Thereafter, the BSM receives a personalized service list confirmation message shown in Table 6 from the terminal in step 509, and confirms the final personalized service of the user in step 510. The BSM sends the terminal an encryption key (LTKM) needed for access to the personalized service in step 511.

As is apparent from the foregoing description, the present invention can provide a broadcast service that satisfies user's service preference, through portable communication devices such as mobile terminals. In addition, the present invention can provide a personalized service that satisfies the highest user preference with the least time investment when the user selects and subscribes to the service or content in a system supporting mobile broadcast services.

## Claims

1. A method for providing a personalized service in Broadcast Service (BCAST), comprising:
sending, by a BCAST Subscription Management (BSM), a service creation request message to a BCAST Service Distribution/Adaptation (BSDA), the service creation request message including at least one purchase data fragment to which maximum allowed content and maximum allowed service elements are added;
creating, by the BSDA, a service guide using the purchase data fragments, and delivering the created service guide to a terminal;
checking, by the terminal, a service type in the service guide, and sending a request for subscription to the personalized service to the BSM; and
sending, by the BSM, a subscription response message including information used to determine whether to finally select the personalized service, and sending an encryption key associated with the personalized service to the terminal.

2. A Broadcast Service (BCAST) system providing a personalized service, comprising:
a terminal for checking a service type from a service guide, and sending a subscription request for the personalized service; and
a BCAST Subscription Management (BSM) for completing subscription to the personalized service taking a user preference and a subscription period into account upon request from the terminal, and providing an encryption key associated with the personalized service to the terminal.
